# EUROPEAN PATENT SPECIFICATION

(11) **EP 4 075 735 B1**
(45) Date of publication and mention of the grant of the patent: **08.05.2024**
(21) Application number: 21167989.9
(22) Date of filing: 13.04.2021
(51) Int. Cl.: H04L 43/028, H04L 43/045, H04L 12/40, H04L 43/18

(54) **DATA FILTER, MEASUREMENT INSTRUMENT, METHOD**
DATENFILTER, MESSINSTRUMENT, VERFAHREN
FILTRE DE DONNÉES, INSTRUMENT DE MESURE, PROCÉDÉ

(43) Date of publication of application: 19.10.2022
(73) Proprietor: Rohde & Schwarz GmbH & Co. KG, 81671 München (DE)
(72) Inventor: GUEZELARSLAN, Baris, 85521 Ottobrunn (DE)
(74) Representative: Novagraaf Group

(56) References cited:
- CN-A- 107 579 893
- US-A1- 2020 019 549

## Description

### TECHNICAL FIELD

The disclosure relates to a data filter, a measurement instrument and a respective method.

### BACKGROUND

Although applicable to any type of data messages, the present disclosure will mainly be described in conjunction with data messages of digital data buses like e.g., a SPI or a CAN bus.

Modern data busses like e.g., a SPI or a CAN bus, produce a huge amount of data messages during operation. Such a huge amount is difficult to handle during development of a communication system, like for example when debugging the data messages.

Document US 2020 / 0 019 549 A1 discloses a system for providing user-interactive parallel coordinates charts. Document CN 107 579 893 A discloses an engine operating parameter measurement method based on a SAEJ1939CAN bus.

There is a need for simplifying the analysis of data messages.

### SUMMARY

The above stated problem is solved by the features of the independent claims. It is understood, that independent claims of a claim category may be formed in analogy to the dependent claims of another claim category.

The present disclosure acknowledges that it is usually very difficult to effectively analyze data messages that are generated in a data communication system. The amount of data messages may be huge and displaying the data messages in tabular form may make it difficult for a user to effectively analyze the data messages.

In addition, the space needed to display such a huge number of messages is also huge. The messages will not fit into a screen of a measurement device or a computer, if the number is larger than e.g. the number of lines of a table that fit on the screen.

It is therefore especially difficult to filter the relevant messages. Usually the user will have to scroll through the messages or search for specific data in the single messages.

The present disclosure therefore provides the data filter that allows easily displaying a huge amount of messages with only little space available on a screen and filtering huge amounts of data messages, and therefore provides the user with a technical tool that enables the user to perform the technical task of interactively searching and retrieving the stored data more effectively.

To this end, the data filter provides the data input interface that is coupled to a memory. The data interface receives data of data messages that conform to a predefined data protocol. The data is usually provided as digital data that is provided in the data messages to the data filter via the data input interface and stored in the memory.

It is understood, that the measurement device will usually receive analog signals that are measured in a bus that conforms to the predefined data protocol and are decoded accordingly to provide the data in digital form.

To this end, the measurement device comprises a measurement port for receiving a data signal comprising data of data messages that conform to a predefined data protocol. It is understood, that a single measurement port may comprise multiple measurement inputs or that multiple measurement ports may be present. Further, the measurement device comprises a decoder that is coupled to the measurement port and the data filter and that decodes the data of the data messages from the received data signal and provides the decoded data to the data filter.

The data filter further comprises a display for showing the data to the user and allowing the user to filter the data as required. In examples, the display may be implemented as he display of the measurement device, instead of as the display of the data filter.

A display controller is coupled to the memory and the display and controls the display to display the received data. In order to allow viewing and filtering the data easily, the controller will control the display to display the data in a diagram with a predefined number of parallel axes like e.g., a predefined number of parallel vertical axes, wherein parallel horizontal axes are also possible. The parallel axes are provided with a respective distance between them. Such a diagram may also be called a parallel-coordinate diagram. Each of the parallel axes represents a predefined characterizing section of the data messages that is defined by the data protocol. It is understood, that more characterizing sections may be present in a data protocol than axes may be present in the parallel-coordinate diagram.

The term "characterizing section" may refer to any section in the data messages that may be of interest to the user. The characterizing sections may for example by defined by their position and length in a data message of the data protocol.

It is understood, that the present patent application may be used with any type of digital data protocol and in any bus or network topology. Possible bus topologies include but are not limited to e.g., point-to-point serial or parallel data busses with two communication entities, like e.g. a RS-232 bus or network, busses or networks with star-topologies or busses or networks with mesh-topologies. Further, the communication in such a bus or network may be a single-master communication or a multi-master communication.

All data protocols have in common that they define one or multiple message formats for messages that are communicated according to the respective protocol. A data protocol may, for example, define a header for a message that is transmitted before the payload data and a section that is transmitted after the payload data. The header and trailing section may include various fields, like e.g. identifiers, counters, checksums, and the like.

Every characterizing section as mentioned in the present disclosure may refer to one of the fields or data types defined by the data protocol. If for example, a data protocol defines that a transmitter identifier is transmitted at the first 4 bits of a data message, these first 4 bits of every data message may be a characterizing section.

The display controller may therefore control the display to display a vertical axis that represents the transmitter identifier. This axis may have a value range from 0 to 15, which is the possible value range for a 4-bit number.

A second field, for example bits 4-5 (counting bits from 0 upwards), may refer to the priority of the message. Therefore, the display controller may control the display to display another vertical axis that represents the priority of the data messages. This axis may have a value range from 0 to 3, which is the possible value range for a 2-bit number. Further vertical axes are possible.

The data filter may store the information about the characteristic sections for predetermined data protocols. A user may then simply select the respective characteristic section and assign it to one of the parallel axes.

The single data messages may be represented in the diagram as polylines with vertices on the parallel axes at the respective value.

The data filter therefore allows displaying a plurality of data messages as graphical representation of overlapping polylines in a parallel coordinate diagram, with each vertical axis representing a characterizing section of the data messages.

Viewing and filtering of the data and data messages is easily possible independently of the number of data messages with the diagram provided in the data filter. The user may for example filter a specific data message by selecting the respective data message on the display, multiple data messages may be selected by the user. The selected data messages my then be highlighted in order to distinguish the selected, and thus filtered, data messages from the remaining data messages.

Filtering of the data may easily be achieved via the different parallel axes and selections of value ranges on the axes, as will be explained in more detail below.

It is understood, that the data filter may be provided as a hardware unit that may be coupled to a measurement device for receiving the data. As alternative, the data filter may be provided in the measurement device as an additional module or function and use the interfaces and display of the measurement device.

In general, the display controller may be provided as a dedicated processing element, like e.g. a processing unit, a microcontroller, an FPGA, a CPLD or the like. The display controller may at least in part also be provided as a computer program product comprising computer readable instructions that may be executed by a processing element. In a further embodiment, the display controller may be provided as addition or additional function or method to the firmware or operating system of a processing element that is already present in the respective application.

In addition, it is understood, that any required supporting or additional hardware may be provided like e.g., a power supply circuitry and clock generation circuitry.

The measurement device may be any kind of measurement device that may record the data do be filtered. Such a measurement device may include but is not limited to an oscilloscope, a data logger, a signal analyzer, a protocol analyzer, a mobile radio tester or the like.

Further embodiments of the present disclosure are subject of the further dependent claims and of the following description, referring to the drawings.

In an example, the data filter may further comprise a user input interface configured to receive a user input, the user input defining a range on one of the parallel axes, and a filter coupled to the user input interface and to the display controller and configured to filter the data based on the range indicated by the user input and to provide respective filtered data to the display controller for displaying on the display.

As explained above, the parallel axes each refer to a characterizing section of the data messages and may comprise a respective value range, wherein in this context a value range may also comprise a single value. It is understood, that the possible value range depends on the number of bits that the respective characterizing section comprises. A 1-bit section will have a value range from 0 to 1, a 2-bit section will have a value range from 0 to 3, a 3-bit section will have a value range from 0 to 7, and so on.

The user input interface may now receive user inputs that define a value or a range on a respective one of the parallel axes. In the above-presented example of the transmitter identifier being a 4-bit value and the priority being a 2-bit value, a user input may, for example, be received that represents a single value or a value range on the axis that represents the transmitter identifier e.g., a value of 5, or a value range of 2 - 6 or the like. The filter may then filter the data accordingly prior to the display controller displaying the data on the display. Filtering in this context my refer to filtering-out i.e., to not showing data that does not match the filter. Alternatively, filtering may comprise marking the respective data i.e., providing the data that matches the filter and the data that does not match the filter with different markers like e.g., different colors.

It is understood, that the functionality of the filter may also be provided as function of the display controller, instead of as a separate filter unit.

As indicated above, each one of the data messages may be displayed as a polyline. The filter therefore may verify if for the respective characterizing section, the value of a respective data message is the value defined by the user input or is within the range defined by the user input. If this is the case, the filter may mark the respective data message. The display controller may then display the polyline of this data message in another color or with another pattern like e.g., as dashed line. As alternative, the display controller may only display the polylines for the marked data messages. It is understood, that the user may select if only polylines of data matching the filter criteria will be shown or all polylines will be shown but with different colors or patterns.

It is further understood, that a user may also provide user inputs for multiple value ranges in one of the parallel axis. In the above example of the transmitter identifier, a user may e.g., select multiple value ranges for filtering, e.g. 3, 5-8 and 12-15.

It is understood, that the user input interface may comprise for example a touch-screen on the display, a mouse, trackball or the like, may of course also be used. A user may select a value or a range by touching or clicking on the respective value on the respective axis or by swiping from a starting value to an end value of a range on a respective axis. The term "on" the axis is to be understood as comprising any input near the axis, wherein a respective threshold or capture distance may be defined. The threshold may for example be the center between two parallel axes or a fixed value defined e.g. in pixels on the display.

As alternative, input fields may be provided that allow a user to select a respective one of the parallel axes and to input a value or a value range.

In a further embodiment, the user input interface may be configured to receive a plurality of user inputs, each one of the user inputs defining a range on a different one of the parallel axes. The filter may be configured to filter the data based on the ranges indicated by the user inputs and to provide the filtered data to the display controller for displaying on the display.

It is understood, that the user may provide user inputs not only for one of the parallel axes. The user may also provide user inputs defining filter ranges on multiple axes.

In the above-presented example, the user may for example provide user inputs on the axes representing the transmitter ID and the priority. The filter may then determine all data messages to match the filter criteria, if they are within any one of the defined filter ranges on all the axes for which filter ranges are provided by the user.

It is understood, that the user may select how the filter combines the single filter ranges. For example, as indicated above, data may be regarded as a match if the respective vertex is within any one of the defined ranges on an axis.

Alternatively, the user input interface may receive from the user multiple sets of filter ranges, wherein every set of filter ranges comprises one filter range for each one of multiple ones of the parallel axes. The filter may then determine a data message to match one of the filter sets, if the data message is within all defined filter ranges of the respective set.

In yet another embodiment, the characterizing sections represented by the parallel axes may be data fields defined by the data protocol, like for example data fields in the header of a data message of the data protocol or in a section of the data message of the data protocol trailing the payload data, or the payload data fields.

As indicated above, the data filter may be applied to any type of digital data transmission that uses predefined message formats for transmitting data between multiple devices.

The characterizing sections may therefore refer to any one of the fields defined for a respective data protocol. In addition, a user may feely define characterizing sections by defining their positions and lengths.

The SPI-Bus (Serial Peripheral Interface) for example generally defines a command byte followed by a data section for the SDI line (Serial Data In).

The command byte may in cases comprise two Operation code bits, and six address bits.

On the SDO line (Serial Data Out) a Global Status Byte followed by a data section may be provided. The Global Status Byte may comprise multiple single-bit flags.

It is understood, that in communications like SPI bus communications, the data on the input line and the data on the output line may be seen as a single data message.

With the data filter, it is therefore possible to easily filter such data messages. For example, data messages comprising respective values in the command byte and respective status bits in the Global Status Byte may be filtered by selecting the respective ranges or values on the respective axis.

It is understood, that the "characterizing section" may refer to any data of interest for a user and that a user may also freely define a characterizing section based on the position and length in the data of a data message. Such freely defined characterizing sections may span more than one of the fields defined in the respective data protocol.

In another embodiment, the data protocol may comprise at least one of a message-based protocol, a single-master serial bus protocol, a multi-master serial bus protocol, a CAN bus protocol, a FlexRay bus protocol, a LIN bus protocol, and a MOST bus protocol.

As already indicated, the data filter may be used with any type of digital data communication system that transmits data in data messages with a defined format.

With the data filter it is also possible to show messages conforming to multiple different protocols in the same diagram. It is understood, that different parallel axes may be defined for the different data protocols.

However, it is also possible to define common axes for multiple data protocols that are concurrently shown. If for example the input and output of a multi-bus hub or switch or generally a multi-bus system is analyzed, the messages of the different data protocols may comprise common fields, like e.g. the message priority or the transmitter identifier. Such fields may be represented by a common axis. At the same time, the source of such common axes in the respective data messages may be different. For example, according to a first data protocol the transmitter identifier may be provided in the first two bits, and according to another data protocol in bits 4-5 of a data message. Nevertheless, the transmitter identifier may be shown on a common axis for both data protocols.

It is understood, that the data filter is not limited to the above-presented types of protocols and may be used with any type of data protocol accordingly.

In an embodiment, the data filter may further comprise a vectorizer configured to load the received data from the memory and convert the data of each of the data messages into a respective multidimensional vector comprising a number of dimensions that equals the number of parallel axes. Each one of the dimensions of the multidimensional vectors may represent the same predefined characterizing section of the data messages that is represented by the respective one of the parallel axes.

As explained above, the single data messages may be shown as polylines with multiple vertexes on the parallel axes. A representation that allows easily determining the position of each vertex on the respective axis is a vector that comprises one dimension for each one of the axes. The position of a vertex on the respective axis is then simply defined by the value of the vector for the respective dimension.

By converting the data that is usually provided as an array into a vector, the single values may be efficiently retrieved and the polyline may be drawn efficiently.

In a further embodiment, the vectorizer may be configured to assign to each dimension of the multidimensional vector representing one of the data messages the value of the characterizing section of the respective data message that is represented by the respective dimension.

The vectorizer may be provided with a mapping table that indicates for every dimension the respective position and number of bits in the data messages, as already indicated above.

The vectorizer may then extract the respective bits from the data and store them as the value of the respective dimension.

In yet another embodiment, the data filter may further comprise a configuration interface coupled to the display controller and configured to receive configuration data indicating which of the parallel axes represents which of the characterizing sections that are defined by the data protocol and to provide the configuration data to the display controller. The display controller may be configured to control the display to display the received data according to the configuration data.

The data filter may receive configuration data to change the order of displaying the parallel axes for the single characterizing sections of the data messages. This allows sorting the axes. The user may for example group characterizing sections that represent somehow related data, even if the data is distributed within the single data messages.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a data filter according to the present disclosure;
Figure 2 shows a block diagram of another embodiment of a data filter according to the present disclosure;
Figure 3 shows a block diagram of an embodiment of a measurement device according to the present disclosure;
Figure 4 shows a flow diagram of an embodiment of a method according to the present disclosure;
Figure 5 shows a flow diagram of another embodiment of a method according to the present disclosure;
Figure 6 shows a diagram of data displayed according to an embodiment of the present disclosure; and
Figure 7 shows a diagram of data displayed according to another embodiment of the present disclosure.

In the figures like reference signs denote like elements unless stated otherwise.

### DETAILED DESCRIPTION OF THE DRAWINGS

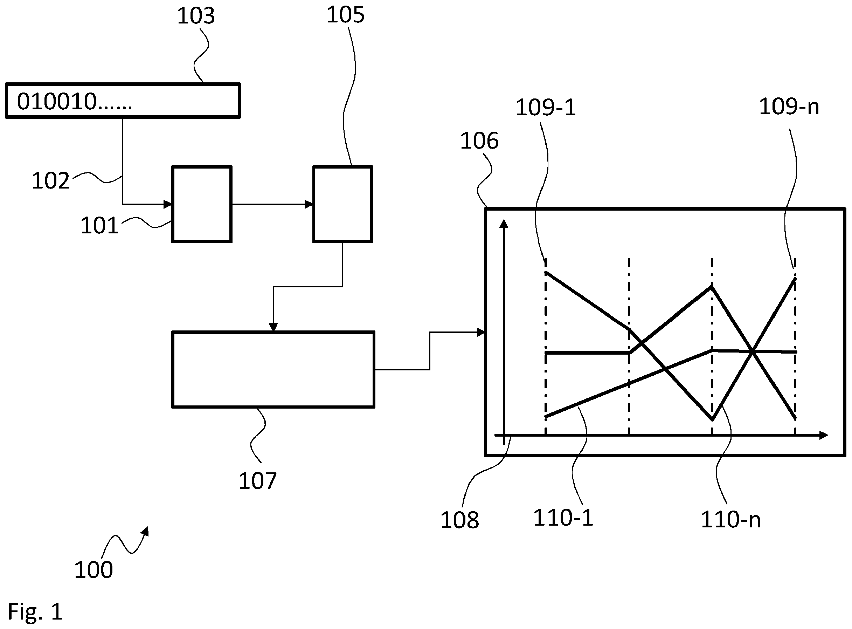

Figure 1 shows a block diagram of a data filter 100. The data filter 100 comprises a data input interface 101 that is coupled to a memory 105. Further, the data filter 100 comprises a display 106 and a display controller 107 coupled to the memory 105 and the display 106.

The data input interface 101 receives data 102 of data messages 103, wherein the data messages 103 are exemplarily shown as a binary data sequence. It is understood, that the data messages 103 conform to a predefined data protocol. In general, this means that the data messages 103 comprise at least one section that represents a defined piece of data and is provided at a known location in the data messages 103.

The data input interface 101 provides the received data to memory 105, where the received data 102 is stored. It is understood, that the memory 105 may be a dedicated memory for storing the received data 102. As alternative, the memory 105 may also be a sort of cache of the display controller 107.

The display controller 107 may retrieve the stored data 102 and control display 106 to display the data 102 to a user. In order to allow the user to easily perceive and then filter the data 102, the display controller 107 controls the display 106 to display the received data in a diagram 108 with a predefined number of parallel axes 109-1 - 109-n. Each of the parallel axes 109-1 - 109-n represents a predefined characterizing section of the data messages 103 that is defined by the data protocol.

In such a diagram 108 the single data messages 103 are shown as polylines, wherein the vertexes of the polylines 110-1 - 110-n are positioned on the respective axis at the height representing the value of the respective characterizing section of the data messages 103.

It is understood, that only three polylines 110-1 - 110-n are exemplarily shown, but that any number of polylines 110-1 - 110-n may be provided in the diagram 108. Especially in real applications, the number of data messages 103, and therefore the polylines 110-1 - 110-n, will be much larger.

A user may filter the data messages interactively by selecting single ones of the polylines 110-1 - 110-n in the display 106. The respective polylines 110-1 - 110-n may then be highlighted in the display.

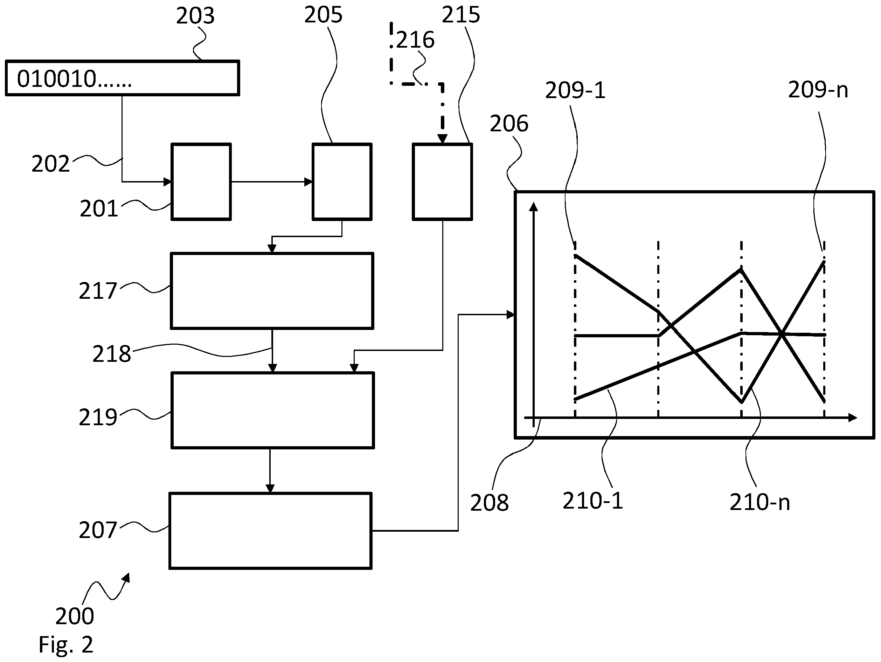

Figure 2 shows a block diagram of another data filter 200. The data filter 200 is based on the data filter 100. Consequently, the data filter 200 comprises a data input interface 201 that is coupled to a memory 205. Further, the data filter 200 comprises a display 206 and a display controller 207 coupled to the memory 205 and the display 206. The explanations provided above regarding the data filter 100, also apply to the data filter 200 mutatis mutandis.

In addition, the data filter 200 comprises a user input interface 215, a vectorizer 217, and a filter 219, wherein at least the vectorizer 217 is an optional element and may be omitted in other embodiments.

The vectorizer 217 is coupled to the memory 205, and the filter 219 is coupled to the vectorizer 217 and the user input interface 215, or the memory 205 and the user input interface 215, if the vectorizer 217 is not present.

The vectorizer 217 loads the received data from the memory 205 and converts the data of each of the data messages 203 into a respective multidimensional vector 218. Each of the multidimensional vectors 218 comprises a number of dimensions that equals the number of parallel axes 209-1 - 209-n. Each one of the dimensions of the multidimensional vectors 218 represents the same predefined characterizing section of the data messages 203 that is represented by the respective one of the parallel axes 209-1 - 209-n. The multidimensional vectors 218 therefore provide efficient access to the relevant sections of the data 202 for the display controller 207. The display controller 207 may therefore create the diagram 208 based on the multidimensional vectors 218.

The vectorizer 217 for creating the multidimensional vectors 218 may assign to each dimension of the multidimensional vectors 218 the value of the characterizing section of the respective data message 203 that is represented by the respective dimension.

As explained above, the vectorizer 217 may be omitted, in this case, the display controller 207 may capable of directly extracting the relevant data from the stored data 202.

The user input interface 215 receives a user input 216, that defines a range on one of the parallel axes 209-1 - 209-n. The range defines a filtering criterium for the data 202 that is performed by filter 219. It is understood, that a range may refer to a start value and an end value or may be a single value range.

The filter 219 filters the data based on the range indicated by the user input 216 and provides respective filtered data to the display controller 207 for displaying on the display 206.

It is understood, that the user may provide more than one user input 216 and that every user input 216 may define a range. The filter 219 may therefore apply multiple filter criteria to the data 202.

In the display 206 the display controller 207 may mark the polylines 210-1 - 210-n that match the filter criteria accordingly.

Although not explicitly shown, the data filter 200 may further comprise a configuration interface coupled to the display controller 207 that receives configuration data indicating which of the parallel axes 209-1 - 209-n represents which one of the characterizing sections that are defined by the data protocol. The configuration interface then provides the configuration data to the display controller, and the display controller 207 controls the display to display 206 the received data according to the configuration data.

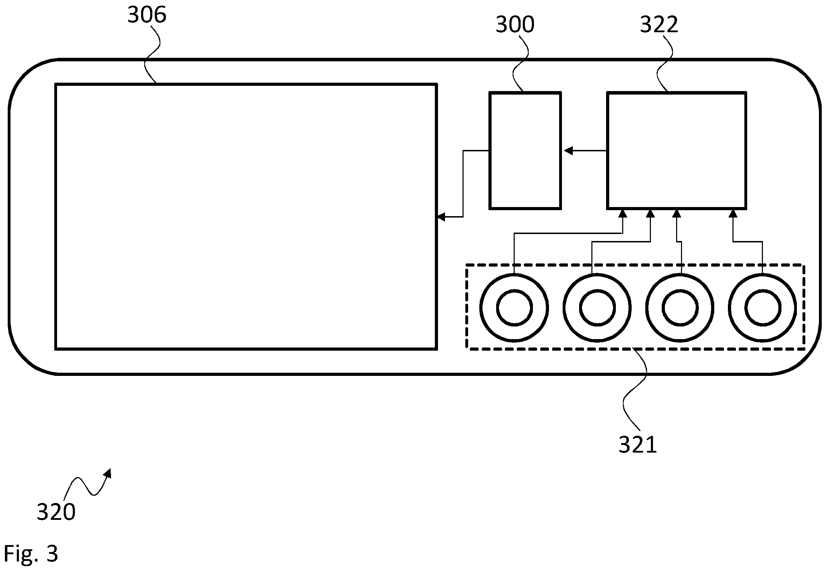

Figure 3 shows a block diagram of an embodiment of a measurement device 320.

The measurement device 320 comprises a data filter 300 according to the present disclosure that is coupled to a decoder 322. The decoder 322 receives a data signal from measurement port 321.

The measurement port 321 receives a data signal comprising data of data messages that conform to a predefined data protocol. The measurement port 321 of the measurement device 320 exemplarily comprises four signal inputs. It is understood, that in other embodiments, the measurement port 321 may comprise any number of signal inputs, starting with one signal input.

The decoder 322 decodes the data of the data messages from the received data signal and provides the decoded data to the data filter 300 that then operates on the data as described above.

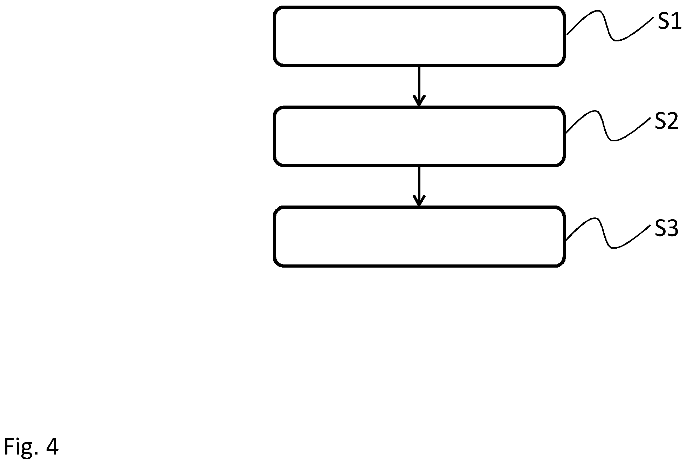

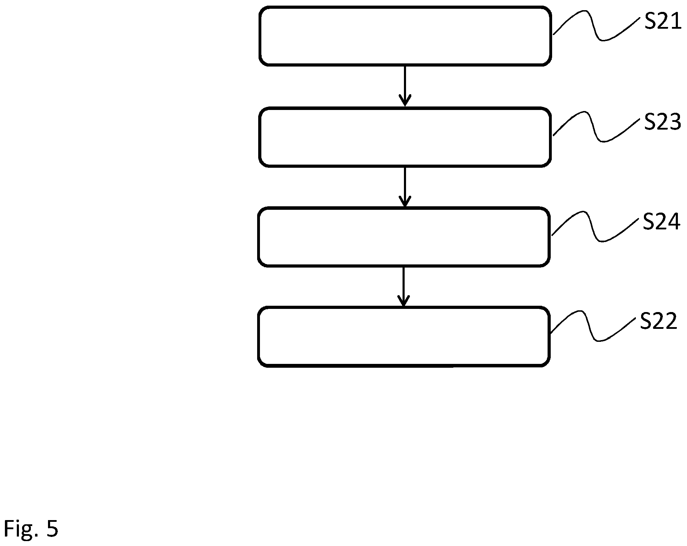

For sake of clarity in the following description of the method-based Figures 4 and 5 the reference signs used above in the description of apparatus based Figures 1 - 3 and Figures 6 - 7 will be maintained.

Figure 4 shows a flow diagram of an embodiment of a method for filtering data.

The method comprises receiving S1 data of data messages 103, 203 that conform to a predefined data protocol, and displaying S2 the received data in a diagram 108, 208 with a predefined number of parallel axes 109-1 - 109-n, 209-1 - 209-n, 609-1, 609-2, 609-3, 709-1, 709-2, 709-3, wherein each one of predefined characterizing sections of the data messages 103, 203 that are defined by the data protocol are represented by one of the parallel axes 109-1 - 109-n, 209-1 - 209-n, 609-1, 609-2, 609-3, 709-1, 709-2, 709-3.

The data protocol may e.g. comprise at least one of a message-based protocol, a single-master serial bus protocol, a multi-master serial bus protocol, a CAN bus protocol, a FlexRay bus protocol, a LIN bus protocol, and a MOST bus protocol.

Figure 5 shows a flow diagram of another embodiment of a method for filtering data that is based on the method of Figure 4.

The method of Figure 5 therefore also comprises receiving S21 data of data messages 103, 203 that conform to a predefined data protocol, and displaying S22 the received data in a diagram 108, 208 with a predefined number of parallel axes 109-1 - 109-n, 209-1 - 209-n, 609-1, 609-2, 609-3, 709-1, 709-2, 709-3. Also, each one of predefined characterizing sections of the data messages 103, 203 that are defined by the data protocol are represented by one of the parallel axes 109-1 - 109-n, 209-1 - 209-n, 609-1, 609-2, 609-3, 709-1, 709-2, 709-3.

Prior to displaying S22, the method of Figure 5 comprises receiving S23 one or more user inputs 216 that each define a range 725, 726, 730 on one of the parallel axes 109-1 - 109-n, 209-1 - 209-n, 609-1, 609-2, 609-3, 709-1, 709-2, 709-3, and filtering S24 the data based on the ranges 725, 726, 730 indicated by the one or more user inputs 216.

The method may further comprise converting the data of each of the data messages 103, 203 into a respective multidimensional vector 218 comprising a number of dimensions that equals the number of parallel axes 109-1 - 109-n, 209-1 - 209-n, 609-1, 609-2, 609-3, 709-1, 709-2, 709-3, wherein each one of the dimensions of the multidimensional vectors 218 represents the same predefined characterizing section of the data messages 103, 203 that is represented by the respective one of the parallel axes 109-1 - 109-n, 209-1 - 209-n, 609-1, 609-2, 609-3, 709-1, 709-2, 709-3.

Converting the data of each of the data messages 103, 203 into a respective multidimensional vector 218 may comprise assigning to each dimension of the multidimensional vector 218 the value of the characterizing section of the respective data message 103, 203 that is represented by the respective dimension.

Further the method may comprise receiving configuration data indicating which of the parallel axes 109-1 - 109-n, 209-1 - 209-n, 609-1, 609-2, 609-3, 709-1, 709-2, 709-3 represents which of the characterizing sections that are defined by the data protocol, wherein displaying comprises displaying the received data according to the configuration data.

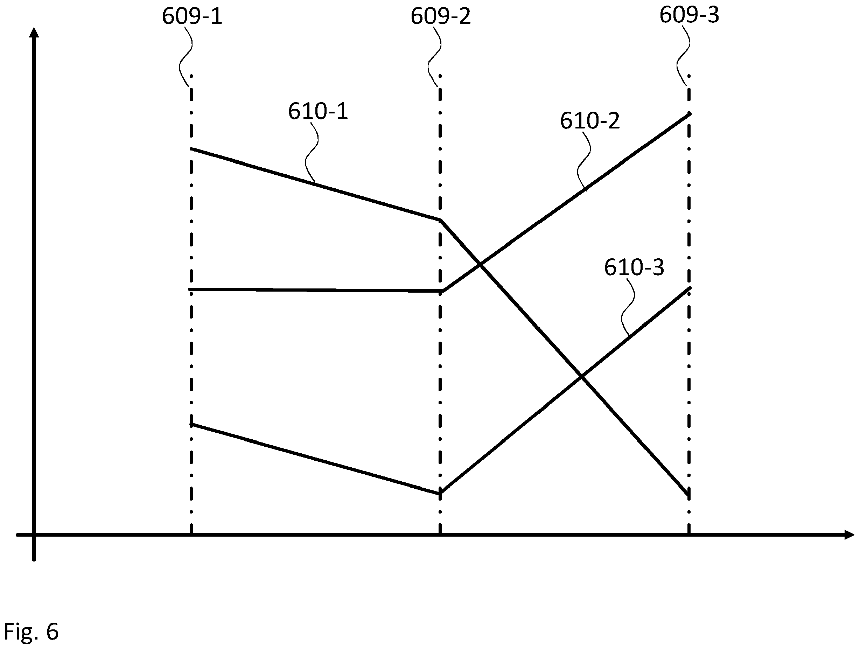

Figure 6 shows a diagram of data displayed according to an embodiment of the present disclosure.

The diagram of Figure 6 comprises three parallel vertical axes 609-1, 609-2, 609-3, which each represent a characterizing section of data messages of a respective data protocol.

Since the value range of the single characterizing sections may be freely defined in the data protocol no specific values are given on the parallel vertical axes 609-1, 609-2, 609-3. It is understood, that all possible values may be evenly distributed over the entire length of the respective parallel vertical axis 609-1, 609-2, 609-3.

In the diagram of Figure 6, three exemplary polylines 610-1, 610-2, 610-3 are shown, wherein more are possible. It can be seen, that the polylines 610-1, 610-2, 610-3 comprise straight lines between the parallel vertical axes 609-1, 609-2, 609-3 that connect the vertexes of the respective polyline 610-1, 610-2, 610-3.

In the exemplary diagram of Figure 6, the first vertical axis 609-1 may for example represent a transmitter ID, the second vertical axis 609-2 may represent a message priority, and the third vertical axis 609-3 may represent a receiver ID. It is understood, that a user may define, to which characterizing section of the data messages the parallel vertical axes 609-1, 609-2, 609-3 refer.

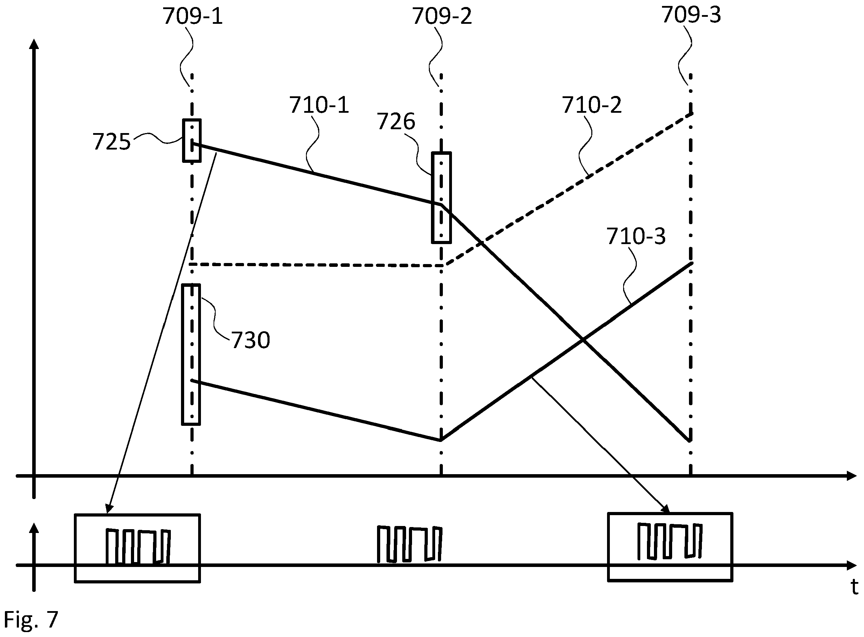

Figure 7 shows a diagram of data displayed according to another embodiment of the present disclosure. The diagram of Figure 7 is based on the diagram of Figure 6 and comprises the same parallel vertical axes 709-1, 709-2, 709-3 and polylines 710-1, 710-2, 710-3.

In addition, in the diagram of Figure 7, the first and the second parallel vertical axes 709-1, 709-2 comprise value ranges for filtering the data that is represented by the polylines 710-1, 710-2, 710-3.

The first vertical axis 709-1 comprises an upper and a lower range, and the second vertical axis 709-2 comprises only one range. The upper range on the first vertical axis 709-1 and the range on the second vertical axis 709-2 form a set for filtering. This means, that only those polylines 710-1, 710-2, 710-3 will be regarded as matching the filter set, that comprise a vertex in both of the ranges.

The lower range on the first vertical axis 709-1 in contrast is a single range and all polylines 710-1, 710-2, 710-3 comprising a vertex in the range will be regarded as matching the filter range.

In the diagram of Figure 7, two of the polylines 710-1, 710-3 match a filter or filter set, and are shown as solid lines. The polyline 710-2 that does not match any filter criteria is shown as dashed line.

Below the main diagram of Figure 7, an additional time-based diagram is shown. In the time-based diagram the data signal is shown over time, that forms the basis for the data of the polylines 710-1, 710-2, 710-3.

Such a time-based diagram may be optionally provided and displayed and the polylines 710-1, 710-2, 710-3 that match a filter criterium may be linked, for example by arrows, with the respective section on the time-base diagram, or by marking with colors.

In the figures like reference signs denote like elements unless stated otherwise. Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### LIST OF REFERENCE SIGNS

- 100, 200, 300: data filter
- 101, 201: data input interface
- 102,202: data
- 103, 203: data message

- 105, 205: memory
- 106, 206, 306: display
- 107, 207: display controller
- 108, 208: diagram
- 109-1 - 109-n, 209-1 - 209-n: parallel axis
- 609-1 , 609-2, 609-3: parallel axis
- 709-1, 709-2, 709-3: parallel axis

- 110-1 - 110-n, 210-1 - 210-n: polyline
- 610-1, 610-2, 610-3: polyline
- 710-1, 710-2, 710-3: polyline

- 215: user input interface
- 216: user input
- 217: vectorizer
- 218: multidimensional vector
- 219: filter

- 320: measurement device
- 321: measurement port
- 322: decoder

- 725, 726, 730: filter range

- S1, S2: method steps
- S21, S22, S23, S24: method steps

## Claims

1. Data filter (100, 200, 300) comprising:
a data input interface (101, 201) configured to receive data (102, 202) of data messages (103, 203) that conform to a predefined data protocol;
a memory (105, 205) coupled to the data input and configured to store the received data (102, 202);
a display (106, 206, 306);
a display controller (107, 207) coupled to the memory (105, 205) and the display (106, 206, 306) and configured control the display (106, 206, 306) to display the received data in a diagram (108, 208) with a predefined number of parallel axes (109-1 - 109-n, 209-1 - 209-n, 609-1, 609-2, 609-3, 709-1, 709-2, 709-3), wherein each of the parallel axes (109-1 - 109-n, 209-1 - 209-n, 609-1, 609-2, 609-3, 709-1, 709-2, 709-3) represents a predefined characterizing section of the data messages (103, 203) that is defined by the data protocol;
a user input interface (215) configured to receive a user input (216), the user input (216) defining a range (725, 726, 730) on one of the parallel axes (109-1 - 109-n, 209-1 - 209-n, 609-1, 609-2, 609-3, 709-1, 709-2, 709-3); and
a filter (219) coupled to the user input interface (215) and to the display controller (107, 207) and configured to filter the data based on the range (725, 726, 730) indicated by the user input (216) and to provide respective filtered data to the display controller (107, 207) for displaying on the display (106, 206, 306);
**characterized by**
a vectorizer (217) configured to load the received data from the memory (105, 205) and convert the data of each of the data messages (103, 203) into a respective multidimensional vector (218) comprising a number of dimensions that equals the number of parallel axes (109-1 - 109-n, 209-1 - 209-n, 609-1, 609-2, 609-3, 709-1, 709-2, 709-3), wherein each one of the dimensions of the multidimensional vectors (218) represents the same predefined characterizing section of the data messages (103, 203) that is represented by the respective one of the parallel axes (109-1 - 109-n, 209-1 - 209-n, 609-1, 609-2, 609-3, 709-1, 709-2, 709-3);
and wherein the display controller (107, 207) is configured control the display (106, 206, 306) to display the received data of the data messages (103, 203) in the diagram (108, 208) based on the multidimensional vectors (218).

2. Data filter (100, 200, 300) according to claim 1, wherein the user input interface (215) is configured to receive a plurality of user inputs (216), each one of the user inputs (216) defining a range (725, 726, 730) on a different one of the parallel axes (109-1 - 109-n, 209-1 - 209-n, 609-1, 609-2, 609-3, 709-1, 709-2, 709-3); and
wherein the filter (219) is configured to filter the data based on the ranges (725, 726, 730) indicated by the user inputs (216) and to provide the filtered data to the display controller (107, 207) for displaying on the display (106, 206, 306).

3. Data filter (100, 200, 300) according to any one of the preceding claims, wherein the characterizing sections represented by the parallel axes (109-1 - 109-n, 209-1 - 209-n, 609-1, 609-2, 609-3, 709-1, 709-2, 709-3) are data fields defined by the data protocol.

4. Data filter (100, 200, 300) according to any one of the preceding claims, wherein data protocol comprises at least one of a message-based protocol, a single-master serial bus protocol, a multi-master serial bus protocol, a CAN bus protocol, a FlexRay bus protocol, a LIN bus protocol, and a MOST bus protocol.

5. Data filter (100, 200, 300) according to claim 1, wherein the vectorizer (217) is configured to assign to each dimension of the multidimensional vector (218) representing one of the data messages (103, 203) the value of the characterizing section of the respective data message (103, 203) that is represented by the respective dimension.

6. Data filter (100, 200, 300) according to any one of the preceding claims, further comprising a configuration interface coupled to the display controller (107, 207) and configured to receive configuration data indicating which of the parallel axes (109-1 - 109-n, 209-1 - 209-n, 609-1, 609-2, 609-3, 709-1, 709-2, 709-3) represents which of the characterizing sections that are defined by the data protocol and to provide the configuration data to the display controller (107, 207);
wherein the display controller (107, 207) is configured to control the display to display (106, 206, 306) the received data according to the configuration data.

7. Measurement device (320) comprising:
a data filter (100, 200, 300) according to any one of the preceding claims;
a measurement port (321) configured to receive a data signal comprising data of data messages (103, 203) that conform to a predefined data protocol; and
a decoder (322) that is coupled to the measurement port (321) and the data filter (100, 200, 300) and that is configured to decode the data of the data messages (103, 203) from the received data signal and provide the decoded data to the data filter (100, 200, 300).

8. Method for filtering data, the method comprising
receiving (S1, S21) data of data messages (103, 203) that conform to a predefined data protocol;
displaying (S2, S22) the received data in a diagram (108, 208) with a predefined number of parallel axes (109-1 - 109-n, 209-1 - 209-n, 609-1, 609-2, 609-3, 709-1, 709-2, 709-3); wherein each one of predefined characterizing sections of the data messages (103, 203) that are defined by the data protocol are represented by one of the parallel axes (109-1 - 109-n, 209-1 - 209-n, 609-1, 609-2, 609-3, 709-1, 709-2, 709-3);
receiving (S23) one or more user inputs (216), the one or more user inputs (216) each defining a range (725, 726, 730) on one of the parallel axes (109-1 - 109-n, 209-1 - 209-n, 609-1, 609-2, 609-3, 709-1, 709-2, 709-3);
filtering (S24) the data based on the ranges (725, 726, 730) indicated by the one or more user inputs (216); and
displaying the filtered data;
**characterized by**
converting the data of each of the data messages (103, 203) into a respective multidimensional vector (218) comprising a number of dimensions that equals the number of parallel axes (109-1 - 109-n, 209-1 - 209-n, 609-1, 609-2, 609-3, 709-1, 709-2, 709-3), wherein each one of the dimensions of the multidimensional vectors (218) represents the same predefined characterizing section of the data messages (103, 203) that is represented by the respective one of the parallel axes (109-1 - 109-n, 209-1 - 209-n, 609-1, 609-2, 609-3, 709-1, 709-2, 709-3).

9. Method according to claim 8, wherein data protocol comprises at least one of a message-based protocol, a single-master serial bus protocol, a multi-master serial bus protocol, a CAN bus protocol, a FlexRay bus protocol, a LIN bus protocol, and a MOST bus protocol.

10. Method according to claim 8, wherein converting comprises assigning to each dimension of the multidimensional vector (218) the value of the characterizing section of the respective data message (103, 203) that is represented by the respective dimension.

11. Method according to any one of the preceding claims 8 to 10, further comprising receiving configuration data indicating which of the parallel axes (109-1 - 109-n, 209-1 - 209-n, 609-1, 609-2, 609-3, 709-1, 709-2, 709-3) represents which of the characterizing sections that are defined by the data protocol;
wherein displaying comprises displaying the received data according to the configuration data.

## Patentansprüche

1. Datenfilter (100, 200, 300), umfassend:
eine Dateneingabeschnittstelle (101, 201), die konfiguriert ist, um Daten (102, 202) von Datennachrichten (103, 203) zu empfangen, die einem vordefinierten Datenprotokoll entsprechen;
einen Speicher (105, 205), der mit der Dateneingabe gekoppelt und konfiguriert ist, um die empfangenen Daten (102, 202) zu speichern;
eine Anzeige (106, 206, 306);
eine Anzeigesteuerung (107, 207), die mit dem Speicher (105, 205) und der Anzeige (106, 206, 306) gekoppelt und konfiguriert ist, die Anzeige (106, 206, 306) zu steuern, um die empfangenen Daten in einem Diagramm (108, 208) mit einer vordefinierten Anzahl von parallelen Achsen (109-1 - 109-n, 209-1 - 209-n, 609-1, 609-2, 609-3, 709-1, 709-2, 709-3) anzuzeigen, wobei jede der parallelen Achsen (109-1 - 109-n, 209-1 - 209-n, 609-1, 609-2, 609-3, 709-1, 709-2, 709-3) einen vordefinierten gekennzeichneten Abschnitt der Datennachrichten (103, 203) darstellt, der durch das Datenprotokoll definiert ist;
eine Benutzereingabeschnittstelle (215), die konfiguriert ist, um eine Benutzereingabe (216) zu empfangen, wobei die Benutzereingabe (216) einen Bereich (725, 726, 730) auf einer der parallelen Achsen (109-1 - 109-n, 209-1 - 209-n, 609-1, 609-2, 609-3, 709-1, 709-2, 709-3) definiert; und
einen Filter (219), der mit der Benutzereingabeschnittstelle (215) und mit der Anzeigesteuerung (107, 207) gekoppelt und konfiguriert ist, um die Daten basierend auf dem Bereich (725, 726, 730), der durch die Benutzereingabe (216) angegeben ist, zu filtern und um jeweilige gefilterte Daten an die Anzeigesteuerung (107, 207) zum Anzeigen auf der Anzeige (106, 206, 306) bereitzustellen;
**gekennzeichnet durch**
einen Vektorisierer (217), der konfiguriert ist, um die empfangenen Daten aus dem Speicher (105, 205) zu laden und die Daten jeder der Datennachrichten (103, 203) in einen jeweiligen mehrdimensionalen Vektor (218) umzuwandeln, umfassend eine Anzahl von Dimensionen, die der Anzahl von parallelen Achsen (109-1 - 109-n, 209-1 - 209-n, 609-1, 609-2, 609-3, 709-1, 709-2, 709-3) entsprechen, wobei jede der Dimensionen der mehrdimensionalen Vektoren (218) denselben vordefinierten kennzeichnenden Abschnitt der Datennachrichten (103, 203) darstellt, der durch die jeweilige eine der parallelen Achsen (109-1 - 109-n, 209-1 - 209-n, 609-1, 609-2, 609-3, 709-1, 709-2, 709-3) dargestellt wird;
und wobei die Anzeigesteuerung (107, 207) konfiguriert ist, die Anzeige (106, 206, 306) zu steuern, um die empfangenen Daten der Datennachrichten (103, 203) in dem Diagramm (108, 208) basierend auf den mehrdimensionalen Vektoren (218) anzuzeigen.

2. Datenfilter (100, 200, 300) nach Anspruch 1, wobei die Benutzereingabeschnittstelle (215) konfiguriert ist, um eine Vielzahl von Benutzereingaben (216) zu empfangen, wobei jede eine der Benutzereingaben (216) einen Bereich (725, 726, 730) auf einer anderen einen der parallelen Achsen (109-1 - 109-n, 209-1 - 209-n, 609-1, 609-2, 609-3, 709-1, 709-2, 709-3) definiert; und
wobei der Filter (219) konfiguriert ist, um die Daten basierend auf den Bereichen (725, 726, 730), die durch die Benutzereingaben (216) angegeben sind, zu filtern und um die gefilterten Daten an die Anzeigesteuerung (107, 207) zum Anzeigen auf der Anzeige (106, 206, 306) bereitzustellen.

3. Datenfilter (100, 200, 300) nach einem der vorstehenden Ansprüche, wobei die kennzeichnenden Abschnitte, die durch die parallelen Achsen (109-1 - 109-n, 209-1 - 209-n, 609-1, 609-2, 609-3, 709-1, 709-2, 709-3) dargestellt sind, Datenfelder sind, die durch das Datenprotokoll definiert sind.

4. Datenfilter (100, 200, 300) nach einem der vorstehenden Ansprüche, wobei das Datenprotokoll mindestens eines von einem nachrichtenbasierten Protokoll, einem seriellen Single-Master-Busprotokoll, einem seriellen Multi-Master-Busprotokoll, einem CAN-Busprotokoll, einem FlexRay-Busprotokoll, einem LIN-Busprotokoll und einem MOST-Busprotokoll umfasst.

5. Datenfilter (100, 200, 300) nach Anspruch 1, wobei der Vektorisierer (217) konfiguriert ist, um jeder Dimension des mehrdimensionalen Vektors (218), der eine der Datennachrichten (103, 203) darstellt, den Wert des kennzeichnenden Abschnitts der jeweiligen Datennachricht (103, 203) zuzuweisen, der durch die jeweilige Dimension dargestellt wird.

6. Datenfilter (100, 200, 300) nach einem der vorstehenden Ansprüche, ferner umfassend eine Konfigurationsschnittstelle, die mit der Anzeigesteuerung (107, 207) gekoppelt und konfiguriert ist, um Konfigurationsdaten zu empfangen, die angeben, welche der parallelen Achsen (109-1 - 109-n, 209-1 - 209-n, 609-1, 609-2, 609-3, 709-1, 709-2, 709-3) welche der gekennzeichneten Abschnitte darstellt, die durch das Datenprotokoll definiert sind, und um die Konfigurationsdaten an die Anzeigesteuerung (107, 207) bereitzustellen;
wobei die Anzeigesteuerung (107, 207) konfiguriert ist, um die Anzeige zu steuern, um die empfangenen Daten gemäß den Konfigurationsdaten anzuzeigen (106, 206, 306).

7. Messvorrichtung (320), umfassend:
einen Datenfilter (100, 200, 300) nach einem der vorstehenden Ansprüche;
einen Messanschluss (321), der konfiguriert ist, um ein Datensignal zu empfangen, umfassend Daten von Datennachrichten (103, 203), die einem vordefinierten Datenprotokoll entsprechen; und
einen Decodierer (322), der mit dem Messanschluss (321) und dem Datenfilter (100, 200, 300) gekoppelt ist und der konfiguriert ist, um die Daten der Datennachrichten (103, 203) aus dem empfangenen Datensignal zu decodieren und die decodierten Daten an den Datenfilter (100, 200, 300) bereitzustellen.

8. Verfahren zum Filtern von Daten, das Verfahren umfassend
Empfangen (S1, S21) von Daten von Datennachrichten (103, 203), die einem vordefinierten Datenprotokoll entsprechen;
Anzeigen (S2, S22) der empfangenen Daten in einem Diagramm (108, 208) mit einer vordefinierten Anzahl von parallelen Achsen (109-1 - 109-n, 209-1 - 209-n, 609-1, 609-2, 609-3, 709-1, 709-2, 709-3); wobei jeder eine von vordefinierten kennzeichnenden Abschnitten der Datennachrichten (103, 203), die durch das Datenprotokoll definiert sind, durch eine der parallelen Achsen (109-1 - 109-n, 209-1 - 209-n, 609-1, 609-2, 609-3, 709-1, 709-2, 709-3) dargestellt sind;
Empfangen (S23) einer oder mehrerer Benutzereingaben (216), wobei die eine oder die mehreren Benutzereingaben (216) jeweils einen Bereich (725, 726, 730) auf einer der parallelen Achsen (109-1 - 109-n, 209-1 - 209-n, 609-1, 609-2, 609-3, 709-1, 709-2, 709-3) definieren;
Filtern (S24) der Daten basierend auf den Bereichen (725, 726, 730), die durch die eine oder die mehreren Benutzereingaben (216) angegeben sind; und
Anzeigen der gefilterten Daten;
**gekennzeichnet durch**
Umwandeln der Daten von jeder der Datennachrichten (103, 203) in einen jeweiligen mehrdimensionalen Vektor (218), umfassend eine Anzahl von Dimensionen, die der Anzahl von parallelen Achsen (109-1 - 109-n, 209-1 - 209-n, 609-1, 609-2, 609-3, 709-1, 709-2, 709-3) gleich sind, wobei jede eine der Dimensionen der mehrdimensionalen Vektoren (218) denselben vordefinierten kennzeichnenden Abschnitt der Datennachrichten (103, 203) darstellt, der durch die jeweilige eine der parallelen Achsen (109-1 - 109-n, 209-1 - 209-n, 609-1, 609-2, 609-3, 709-1, 709-2, 709-3) dargestellt ist.

9. Verfahren nach Anspruch 8, wobei das Datenprotokoll mindestens eines von einem nachrichtenbasierten Protokoll, einem seriellen Single-Master-Busprotokoll, einem seriellen Multi-Master-Busprotokoll, einem CAN-Busprotokoll, einem FlexRay-Busprotokoll, einem LIN-Busprotokoll und einem MOST-Busprotokoll umfasst.

10. Verfahren nach Anspruch 8, wobei das Umwandeln das Zuweisen des Wertes des kennzeichnenden Abschnitts der jeweiligen Datennachricht (103, 203), die durch die jeweilige Dimension dargestellt wird, zu jeder Dimension des mehrdimensionalen Vektors (218) umfasst.

11. Verfahren nach einem der vorstehenden Ansprüche 8 bis 10, ferner umfassend das Empfangen von Konfigurationsdaten, die angeben, welche der parallelen Achsen (109-1 - 109-n, 209-1 - 209-n, 609-1, 609-2, 609-3, 709-1, 709-2, 709-3) welche der kennzeichnenden Abschnitte darstellt, die durch das Datenprotokoll definiert sind;
wobei das Anzeigen das Anzeigen der empfangenen Daten gemäß den Konfigurationsdaten umfasst.

## Revendications

1. Filtre de données (100, 200, 300) comprenant :
une interface d'entrée de données (101, 201) configurée pour recevoir des données (102, 202) de messages de données (103, 203) conformes à un protocole de données prédéfini ;
une mémoire (105, 205) couplée à l'entrée de données et configurée pour stocker les données reçues (102, 202) ;
un écran (106, 206, 306) ;
un dispositif de commande d'affichage (107, 207) couplé à la mémoire (105, 205) et à l'écran (106, 206, 306) et configuré pour commander l'écran (106, 206, 306) pour afficher les données reçues dans un diagramme (108, 208) avec un nombre prédéfini d'axes parallèles (109-1 - 109-n, 209-1 - 209-n, 609-1, 609-2, 609-3, 709-1, 709-2, 709-3), dans lequel chacun des axes parallèles (109-1 - 109-n, 209-1 - 209-n, 609-1, 609-2, 609-3, 709-1, 709-2, 709-3) représente une section de caractérisation prédéfinie des messages de données (103, 203) qui est définie par le protocole de données ;
une interface d'entrée utilisateur (215) configurée pour recevoir une entrée utilisateur (216), l'entrée utilisateur (216) définissant une plage (725, 726, 730) sur l'un des axes parallèles (109-1 - 109-n, 209-1 - 209-n, 609-1, 609-2, 609-3, 709-1, 709-2, 709-3) ; et
un filtre (219) couplé à l'interface d'entrée utilisateur (215) et au dispositif de commande d'affichage (107, 207) et configuré pour filtrer les données sur la base de la plage (725, 726, 730) indiquée par l'entrée utilisateur (216) et pour fournir des données filtrées respectives au dispositif de commande d'affichage (107, 207) pour les afficher sur l'écran (106, 206, 306) ;
**caractérisé par**
un vectoriseur (217) configuré pour charger les données reçues de la mémoire (105, 205) et convertir les données de chacun des messages de données (103, 203) en un vecteur multidimensionnel respectif (218) comprenant un nombre de dimensions qui est égal au nombre d'axes parallèles (109-1 - 109-n, 209-1 - 209-n, 609-1, 609-2, 609-3, 709-1, 709-2, 709-3), dans lequel chacune des dimensions des vecteurs multidimensionnels (218) représente la même section de caractérisation prédéfinie des messages de données (103, 203) qui est représentée par l'axe respectif des axes parallèles (109-1 - 109-n, 209-1 - 209-n, 609- 1, 609-2, 609-3, 709-1, 709-2, 709-3) ;
et dans lequel le dispositif de commande d'affichage (107, 207) est configuré pour commander l'écran (106, 206, 306) pour afficher les données reçues des messages de données (103, 203) dans le diagramme (108, 208) sur la base des vecteurs multidimensionnels (218).

2. Filtre de données (100, 200, 300) selon la revendication 1, dans lequel l'interface d'entrée utilisateur (215) est configurée pour recevoir une pluralité d'entrées utilisateur (216), chacune des entrées utilisateur (216) définissant une plage (725, 726, 730) sur un axe différent des axes parallèles (109-1 - 109-n, 209-1 - 209-n, 609-1, 609-2, 609-3, 709-1, 709-2, 709-3) ; et
dans lequel le filtre (219) est configuré pour filtrer les données sur la base des plages (725, 726, 730) indiquées par les entrées utilisateur (216) et pour fournir les données filtrées au dispositif de commande d'affichage (107, 207) pour les afficher sur l'écran (106, 206, 306).

3. Filtre de données (100, 200, 300) selon l'une quelconque des revendications précédentes, dans lequel les sections de caractérisation représentées par les axes parallèles (109-1 - 109-n, 209-1 - 209-n, 609-1, 609-2, 609-3, 709-1, 709-2, 709-3) sont des champs de données définis par le protocole de données.

4. Filtre de données (100, 200, 300) selon l'une quelconque des revendications précédentes, dans lequel le protocole de données comprend au moins l'un parmi un protocole basé sur les messages, un protocole de bus série à maître unique, un protocole de bus série multi-maître, un protocole de bus CAN, un protocole de bus FlexRay, un protocole de bus LIN, et un protocole de bus MOST.

5. Filtre de données (100, 200, 300) selon la revendication 1, dans lequel le vectoriseur (217) est configuré pour attribuer à chaque dimension du vecteur multidimensionnel (218) représentant l'un des messages de données (103, 203) la valeur de la section de caractérisation du message de données respectif (103, 203) qui est représentée par la dimension respective.

6. Filtre de données (100, 200, 300) selon l'une quelconque des revendications précédentes, comprenant en outre une interface de configuration couplée au dispositif de commande d'affichage (107, 207) et configurée pour recevoir des données de configuration indiquant lequel des axes parallèles (109-1 - 109-n, 209-1 - 209-n, 609-1, 609-2, 609-3, 709-1, 709-2, 709-3) représente laquelle des sections de caractérisation qui sont définies par le protocole de données et pour fournir les données de configuration au dispositif de commande d'affichage (107, 207) ;
dans lequel le dispositif de commande d'affichage (107, 207) est configuré pour commander l'écran pour afficher (106, 206, 306) les données reçues en fonction des données de configuration.

7. Dispositif de mesure (320) comprenant :
un filtre de données (100, 200, 300) selon l'une quelconque des revendications précédentes ;
un port de mesure (321) configuré pour recevoir un signal de données comprenant des données de messages de données (103, 203) conformes à un protocole de données prédéfini ; et
un décodeur (322) qui est couplé au port de mesure (321) et au filtre de données (100, 200, 300) et configuré pour décoder les données des messages de données (103, 203) du signal de données reçu et fournir les données décodées au filtre de données (100, 200, 300).

8. Procédé de filtrage de données, le procédé comprenant
la réception (S1, S21) de données de messages de données (103, 203) conformes à un protocole de données prédéfini ;
l'affichage (S2, S22) des données reçues dans un diagramme (108, 208) avec un nombre prédéfini d'axes parallèles (109-1 - 109-n, 209-1 - 209-n, 609-1, 609-2, 609-3, 709-1, 709-2, 709-3) ; dans lequel chacune des sections de caractérisation prédéfinies des messages de données (103, 203) qui sont définies par le protocole de données est représentée par l'un des axes parallèles (109-1 - 109-n, 209-1 - 209-n, 609-1, 609-2, 609-3, 709-1, 709-2, 709-3) ;
la réception (S23) d'une ou plusieurs entrées utilisateur (216), la ou les entrées utilisateur (216) définissant chacune une plage (725, 726, 730) sur l'un des axes parallèles (109-1 - 109-n, 209-1 - 209-n, 609-1, 609-2, 609-3, 709-1, 709-2, 709-3) ;
le filtrage (S24) des données sur la base des plages (725, 726, 730) indiquées par la ou les entrées utilisateur (216) ; et
l'affichage des données filtrées ;
**caractérisé par**
la conversion des données de chacun des messages de données (103, 203) en un vecteur multidimensionnel respectif (218) comprenant un nombre de dimensions qui est égal au nombre d'axes parallèles (109-1 - 109-n, 209-1 - 209-n, 609-1, 609-2, 609-3, 709-1, 709-2, 709-3), dans lequel chacune des dimensions des vecteurs multidimensionnels (218) représente la même section de caractérisation prédéfinie des messages de données (103, 203) qui est représentée par l'axe respectif des axes parallèles (109-1 - 109-n, 209-1 - 209-n, 609-1, 609-2, 609-3, 709-1, 709-2, 709-3).

9. Procédé selon la revendication 8, dans lequel le protocole de données comprend au moins l'un parmi un protocole basé sur les messages, un protocole de bus série à maître unique, un protocole de bus série multi-maître, un protocole de bus CAN, un protocole de bus FlexRay, un protocole de bus LIN, et un protocole de bus MOST.

10. Procédé selon la revendication 8, dans lequel la conversion comprend l'attribution à chaque dimension du vecteur multidimensionnel (218) de la valeur de la section de caractérisation du message de données respectif (103, 203) qui est représentée par la dimension respective.

11. Procédé selon l'une quelconque des revendications précédentes 8 à 10, comprenant en outre la réception de données de configuration indiquant lequel des axes parallèles (109-1 - 109-n, 209-1 - 209-n, 609-1, 609-2, 609-3, 709-1, 709-2, 709-3) représente laquelle des sections de caractérisation qui sont définies par le protocole de données ;
dans lequel l'affichage comprend l'affichage des données reçues en fonction des données de configuration.
